# EUROPEAN PATENT SPECIFICATION

(11) **EP 0 798 799 B1**
(45) Date of publication and mention of the grant of the patent: **04.10.2000**
(21) Application number: 97200879.1
(22) Date of filing: 25.03.1997
(51) Int. Cl.: H01M 8/06, B01D 53/58, C10K 1/10

(54) **Removal of ammonia from acid fuel cell fuel gas stream**
Entfernung von Ammoniak aus einem Gasstrom einer Säure-Brennstoffzelle
Elimination d'ammoniac d'un courant de combustible d'une pile à combustible acide

(30) Priority: 28.03.1996 US 623478
(43) Date of publication of application: 01.10.1997
(73) Proprietor: INTERNATIONAL FUEL CELLS CORPORATION, South Windsor, CT 06074 (US)
(72) Inventor: Foley, Peter F., Manchester, CT 06040 (US); Preston, John L., Jr., Hebron, CT 06248 (US); Luczak, Francis J., Glastonbury, CT 06033 (US); Teeling, Christopher R., Enfield, CT 06082 (US)
(74) Representative: Perani, Aurelio

(56) References cited:
- EP-A- 0 697 454
- DE-A- 4 206 241
- GB-A- 1 578 865
- US-A- 4 259 302
- US-A- 4 292 285
- US-A- 4 379 036
- US-A- 5 244 645
- PATENT ABSTRACTS OF JAPAN vol. 095, no. 004, 31 May 1995 & JP 07 006781 A (FUJI ELECTRIC CO LTD), 10 January 1995,

## Description

### Technical Field

This invention relates to the removal of ammonia from the fuel gas stream in a phosphoric acid fuel cell power plant. More particularly, this invention relates to an ammonia scrubber system and a method of operating the same which provides extended operating life to the ammonia removal system.

### Background Art

U.S. Patent No. 4,259,302 granted March 31, 1981 to M. Katz, et al., discusses the problems caused in phosphoric acid fuel cell power plants by the presence of ammonia in the fuel gas stream for the power plant. Ammonia will be formed in the fuel gas reformer in the power plant, and it will be formed in concentrations which can adversely affect the power plant in cases where the gas being used to fuel the power plant contains significant amounts of nitrogen. If ammonia is present in the fuel gas stream in amounts in excess of about 1 ppm, and is allowed to enter the active area of the power plant, it will cause decay in power plant performance by reacting with the phosphoric acid to form a coating of dihydrogen ammonium phosphate on the anode side of the active area which interferes with the electrochemical reaction, and which also consumes the phosphoric acid electrolyte. The above-noted patent deals with the ammonia problem by passing the reformed fuel gas stream through scrubber beds of carbon pellets which are soaked with phosphoric acid. The patent recognizes that the amount of acid contained In the scrubber beds will be depleted by reacting with the ammonia in the reformed gas, and, therefore, suggests that parallel scrubber beds be used in the system. One of the beds will be used to remove ammonia from the reformed fuel gas while the other bad will be regenerated with oxygen to convert the dihydrogen ammonium phosphate back to phosphoric acid and creating an effluent of nitrogen gas and air. Each bed is periodically regenerated, so that while one bed is being used to scrub the incoming gas stream, the other bed is being regenerated. Both of the ammonia scrubbing beds are operated at a temperature of about 193°C (380°F)., both when scrubbing and when regenerating. A problem arises when the scrubber beds are operated at this temperature level. This problem relates to the fact that the acid in the scrubber beds will evaporate into the reformer gas stream during both the scrubbing and the regenerating steps at such operating temperatures. Acid evaporation from the scrubbing beds reduces the effective life of the scrubber beds, and the acid lost by evaporation cannot be replaced by the regeneration of the beds. This fact limits the effective life of the scrubber system described in this patent.

### Disclosure of the Invention

This invention relates to an ammonia scrubber system which provides extended life to the scrubber bed without the need to include plural scrubber bed stations, and without the need to regenerate the scrubber bed. The scrubber bed is preferably formed from porous carbon pellets which are impregnated with phosphoric acid. The scrubber system includes a heat exchanger-precooler through which the reformed fuel gas passes prior to its entering the scrubber bed. The precooler lowers the temperature of the reformed fuel gas to limit the evaporation of the H₃PO₄ to a level where the acid lost from the scrubber by evaporation is not the limiting factor in determining the scrubber bed size or change out time period. By operating the scrubber at a temperature of less than 177°C (350° F), the evaporative loss from the scrubber is reduced by a factor of three as compared to a scrubber operating the 193°C (380° F) temperature specified in the 4,259,302 patent. A further advantage of the present invention is that it provides positive control over the scrubber bed temperature over a wide range of reformed fuel gas temperatures, which will vary with power plant operating conditions. For example, if the inlet temperature in the system described in the 4,259,302 patent were increased to 210°C (410° F), then the phosphoric acid evaporative loss would be seven times the rate of evaporative loss in a scrubber bed operated at a temperature of 177°C (350° F).

It is therefore an object of this invention to provide a fuel gas ammonia scrubbing system for a fuel cell power plant which scrubbing system possesses an extended operating life.

It is a further object of this invention to provide an ammonia scrubbing system of the character described which does not require the inclusion of a plurality of scrubber beds in the system.

It is an additional object of this invention to provide an ammonia scrubbing system of the character described which does not depend on scrubber bed regeneration to achieve a longer operating life.

It is another object of this invention to provide an ammonia scrubbing system of the character described which minimizes acid loss due to evaporation of acid from the scrubber bed into the fuel gas stream.

These and other objects and advantages of the invention will become more readily apparent from the following detailed description of a preferred embodiment of the invention when taken in conjunction with the accompanying drawings, in which:

### Brief Description of the Drawings

FIG. 1 is a schematic view of a fuel cell power plant employing the ammonia scrubbing system of this invention; and
FIG. 2 is an elevational view of the ammonia scrubbing station in the power plant of FIG. 1.

### Best Mode For Carrying Out The Invention

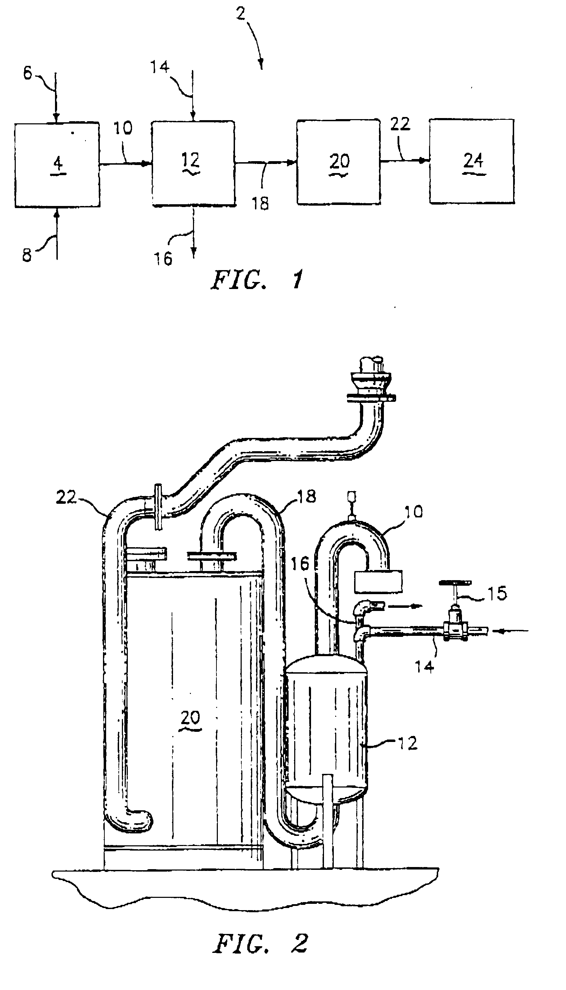

Referring to the drawings, there is shown in FIG. 1 a schematic representation of a fuel cell power plant, denoted generally by the numeral 2, which employs the fuel gas ammonia scrubbing system of this invention. The power plant 2 includes a fuel gas reformer 4 which receives raw fuel gas, such as natural gas, landfill gas, or the like, via fuel gas line 6. The reformer 4 also receives steam from line 8. Reformed fuel gas flows through line 10 to a fuel gas cooler 12 wherein the reformed fuel gas is cooled to a temperature of 177°C (350° F) or less. The cooler 12 is a heat exchanger, and the heat exchange coolant flows through the cooler 12 via lines 14 and 16. The cooled reformed fuel gas flows from the cooler 12 through line 18 to the ammonia scrubbing station 20. The ammonia-scrubbed fuel gas flows from the scrubbing station 20 through line 22 into the active area 24 of the fuel cell stack within the power plant.

FIG. 2 shows a preferred configuration of the fuel gas cooler-scrubber portion of the power plant. It will be noted that the cooler 12 may take the form of a tank, and the reformer gas line 10 can enter the tank 12 at its upper end and flows downwardly through the tank 12 to the outlet line 18. The cooled fuel gas enters the ammonia scrubber tank 20 preferably through its upper end and flows downwardly through the acid-impregnated carbon pellets in the tank 20 to the outlet line 22. The scrubbed reformer gas then flows into the fuel gas inlet manifold on a fuel cell stack (not shown) in the power plant. The temperature of the cooler 12 can be controlled by means of a manual or automatic valve 15 which controls the rate of flow of coolant through the coolant inlet line 14.

It will be appreciated that the ammonia scrubber system of this invention possesses an extended operating life due to the minimization of acid that is evaporated into the fuel gas stream. The scrubber system of this invention is simple and compact; can be operated at various temperatures; and can be retrofitted into existing fuel cell power plants,

Since many changes and variations of the disclosed embodiment of the invention may be made without departing from the inventive concept, it is not intended to limit the invention other than as required by the appended claims.

## Claims

1. A method for removing ammonia from reformed fuel cell power plant fuel gas, said method comprising the steps of:
a) providing a reformed fuel gas stream;
b) cooling said reformed fuel gas stream to a temperature of 177°C (350° F) or less so as to form a cooled fuel gas stream; and
c) exposing said cooled fuel gas stream to phosphoric acid so as to convert ammonia in said cooled fuel gas stream to ammonium phosphates sufficient to lower the concentration of ammonia in said cooled fuel gas stream to less than 1 ppm.

2. A method for removing ammonia from reformed fuel cell power plant fuel gas, said method comprising the steps of:
a) providing a reformed fuel gas stream;
b) providing a scrubber bed which contains phosphoric acid; and
c) passing said reformed fuel gas stream through said scrubber bed under conditions which will lower the concentration of ammonia in said fuel gas stream to less than 1 ppm, and will remove less than 1 ppm of phosphoric acid from said scrubber bed.

3. The method of Claim 2 comprising the step of lowering the temperature of said reformed fuel gas stream to less than 177°C (350° F) prior to passing the reformed gas stream through the scrubber bed.

4. A system for removing ammonia from a reformed fuel cell power plant fuel gas stream, said system comprising:
a) reformer means for forming a reformed fuel gas stream;
b) scrubbing means for forming an ammonia scrubber which contains phosphoric acid;
c) cooler means for lowering the temperature of the reformed fuel gas stream; and
d) means for directing the reformed fuel gas stream from said reformer means through said cooler means, and thence through said scrubbing means.

5. The system of Claim 4 wherein said cooler means is operable to lower the temperature of said reformed gas stream to a temperature of 177°C (350° F) or less.

6. The system of Claim 4 wherein said scrubbing means is operable to lower the concentration of ammonia in the gas stream to a concentration of 1 ppm or less, and the cooler means is operable to lower the temperature of the reformed gas stream to a temperature which results in removal of less than 1 ppm of phosphoric acid vapor from said scrubbing means.

## Patentansprüche

1. Verfahren zum Entfernen von Ammoniak aus reformiertem Brenngas, das aus einem Brennstoffzellen-Kraftwerk stammt, wobei das Verfahren folgende Schritte umfaßt:
a) Bereitstellen einer Strömung von reformiertem Brenngas;
b) Abkühlen der Strömung von reformiertem Brenngas auf eine Temperatur von 177° C (350° F) oder niedriger, um eine abgekühlte Brenngasströmung zu erhalten; und
c) Bearbeiten der abgekühlten Brenngasströmung mit Phosphorsäure, um das in der abgekühlten Brenngasströmung enthaltene Ammoniak soweit in Ammoniumphosphat umzuwandeln, daß die Ammoniak-Konzentration im abgekühlten Brenngasstrom unter 1 ppm liegt.

2. Verfahren zum Entfernen von Ammoniak aus reformiertem Brenngas, das aus einem Brennstoffzellen-Kraftwerk stammt, wobei das Verfahren folgende Schritte umfaßt:
a) Bereitstellen einer Strömung von reformiertem Brenngas;
b) Bereitstellen eines Skrubber-Bettes, das Phosphorsäure enthält; und
c) Leiten der Strömung von reformiertem Brenngas durch das Skrubber-Bett unter Bedingungen, die dazu führen, daß die Ammoniak-Konzentration in der Brenngasströmung auf weniger als 1 ppm sinkt und daß dem Skrubber-Bett weniger als 1 ppm Phosphorsäure entzogen wird.

3. Verfahren nach Anspruch 2, umfassend den Schritt, daß die Temperatur der Strömung von reformiertem Brenngas auf weniger als 177° C (350° F) abgesenkt wird, bevor die Strömung von reformiertem Gas durch das Skrubber-Bett geleitet wird.

4. System zum Entfernen von Ammoniak aus einer Strömung von reformiertem Brenngas, das aus einem Brennstoffzellen-Kraftwerk stammt, wobei das System
a) eine Reformier-Einrichtung zum Bilden einer Strömung von reformiertem Brenngas umfaßt; sowie
b) eine Skrubber-Einrichtung zum Bilden eines Ammoniak-Skrubbers, der Phosphorsäure enthält;
c) eine Abkühl-Einrichtung zum Absenken der Temperatur der Strömung von reformiertem Brenngas; und
d) eine Einrichtung zum Leiten der Strömung von reformiertem Brenngas von der Reformier-Einrichtung durch die Abkühl-Einrichtung und von dort durch die Skrubber-Einrichtung.

5. System nach Anspruch 4, wobei die Abkühl-Einrichung so betrieben werden kann, um die Temperatur der Strömung von reformiertem Gas auf eine Temperatur von 177° C (350° F) oder weniger zu senken.

6. System nach Anspruch 4, wobei die Skrubber-Einrichtung so betrieben werden kann, um die Ammoniak-Konzentration in der Gasströmung auf eine Konzentration von 1 ppm oder weniger zu senken, und wobei die Abkühl-Einrichung so betrieben werden kann, um die Temperatur der Strömung von reformiertem Gas auf eine Temperatur zu senken, die zur Entfernung von weniger als 1 ppm an Phosphorsäuredampf aus der Skrubber-Einrichtung führt.

## Revendications

1. Procédé d'extraction d'ammoniac d'un gaz combustible reformé d'une centrale d'énergie à piles à combustible, le procédé comprenant les étapes suivantes :
a) la formation d'un courant de gaz combustible reformé,
b) le refroidissement du courant de gaz combustible reformé à une température inférieure ou égale à 177 °C (350 °F) afin qu'un courant de gaz combustible refroidi soit formé, et
c) l'exposition du courant de gaz combustible refroidi à de l'acide phosphorique afin que l'ammoniac contenu dans le courant de gaz combustible refroidi se transforme en phosphates d'ammonium d'une manière suffisante pour que la concentration d'ammoniac du courant de gaz combustible refroidi soit abaissée au-dessous de 1 ppm.

2. Procédé d'extraction d'ammoniac d'un gaz combustible reformé d'une centrale d'énergie à piles à combustible, le procédé comprenant les étapes suivantes :
a) la formation d'un courant de gaz combustible reformé,
b) la formation d'un lit d'épurateur qui contient de l'acide phosphorique, et
c) la circulation du courant de gaz combustible reformé dans le lit d'épurateur dans des conditions qui provoquent la réduction de la concentration de l'ammoniac du courant de gaz combustible à une valeur inférieure à 1 ppm, et le retrait de moins de 1 ppm d'acide phosphorique du lit épurateur.

3. Procédé selon la revendication 2, comprenant une étape d'abaissement de la température du courant de gaz combustible reformé au-dessous de 177 °C (350 ° F) avant la circulation du courant de gaz reformé dans le lit d'épurateur.

4. Système d'extraction d'ammoniac d'un courant de gaz combustible reformé d'une centrale d'énergie à piles à combustible, le système comprenant :
a) un dispositif reformé destiné à créer un courant de gaz combustible reformé,
b) un dispositif d'épuration destiné à former un épurateur d'ammoniac qui contient de l'acide phosphorique,
c) un dispositif refroidisseur destiné à abaisser la température du courant de gaz combustible reformé, et
d) un dispositif destiné à diriger le courant de gaz combustible reformé du dispositif de reformage dans le dispositif refroidisseur, puis dans le dispositif d'épuration.

5. Système selon la revendication 4, dans lequel le dispositif refroidisseur est apte à abaisser la température du courant de gaz reformé à une température inférieure ou égale à 177 °C (350 °F).

6. Système selon la revendication 4, dans lequel le dispositif d'épuration est apte à abaisser la concentration d'ammoniac du courant gazeux à une concentration inférieure ou égale à 1 ppm, et le dispositif refroidisseur est apte à abaisser la température du courant de gaz reformé à une température qui provoque l'extraction de moins de 1 ppm de vapeur d'acide phosphorique du dispositif d'épuration.
